# EUROPEAN PATENT APPLICATION

(11) **EP 4 563 492 A2**
(43) Date of publication of application: **04.06.2025**
(21) Application number: 25170742.8
(22) Date of filing: 27.03.2023
(51) Int. Cl.: B65D 81/18

(54) **THERMALLY INSULATED TRANSPORTATION CONTAINER HAVING A HARNESS**

(30) Priority: 29.03.2022 GB 202204424; 29.03.2022 GB 202204423
(62) Divisional of application: 23716650.9
(71) Applicant: Tower Cold Chain Solutions Limited, Reading, Berkshire RG7 4PN (GB)
(72) Inventor: HAWES, Martin, Radcliffe on Trent NG12 1AJ (GB); VANN, James, Hampton Hill TW12 1DB (GB); MOSELEY, Harry, Oxford OX4 1LH (GB)
(74) Representative: Murgitroyd & Company

(57) **Abstract**

A thermally insulated transportation container for transporting temperature sensitive goods, said container including: a main body (3) having, an outer shell (7) including a front side wall (7b), a rear side wall (7c), a first lateral side wall (7d), a second lateral side wall (7e), and a base (7a), an inner liner (9), which defines a payload volume (13), and a plurality of thermal insulation panels (11) located between the outer shell (7) and the inner liner (9); an opening member (5) to provide access to the payload volume (13); and a harness (19) arranged to enable a user to manually lift the container and/or to maintain the opening member (5) in a closed position.

## Description

The present invention relates to a thermally insulated transportation container for transporting temperature sensitive goods.

Thermally insulated containers are used to transport items that are sensitive to temperature and must therefore be maintained within predetermined temperature ranges, such as +2°C to +8°C and +15°C to +25°C, or close to a particular temperature such as -20°C. Such items include goods such as vaccines and drugs, biological samples, tissue cultures, chilled and frozen foods, and many other products, some of which have extremely high financial value and are very sensitive to temperature changes. It is essential that such products are maintained within the appropriate temperature ranges during transportation.

Such goods can be transported in cardboard or plastic containers packed with insulative materials, such as polystyrene, and phase change materials (hereafter referred to as PCMs) that have been cooled or heated to a predetermined temperature to provide additional heating or cooling as required. Heat energy flows into or out of the container, according to the difference between the ambient temperature and the internal temperature of the container. The temporal ambient temperature profile that will be experienced by the container cannot be predicted a priori, since containers may be moved from relatively cold countries to relatively hot countries and may be left standing for a significant period of time.

If the container is exposed to excessively high or low temperatures for extended periods, the internal temperature may go outside the required range, causing damage to the contents. The requirement to open a container on its journey increases the risk of payload theft. In current containers, the number and type of PCM packs employed is calculated according to the anticipated delivery time and the ambient temperature ranges likely to be experienced during transportation. However, as delivery can take longer than anticipated and the ambient temperatures may be much higher or lower than expected, the payload temperature may go outside the required range. During transportation, shocks, collisions or vibrations can cause the goods to move within the container, particularly those located at the side walls; these might then fall to a lower part of the container, increasing the risk of being heated/cooled to a temperature outside the predetermined safe range.

Anecdotal evidence suggests that large numbers of pharmaceutical/medicinal products are rendered unusable each year because they are not transported in the correct temperature range. For the pharmaceutical industry this presents significant waste, and hence cost, and there is an environmental impact as new goods will have to be produced and transported. For recipients of the goods there are significant health risks, because it may not be evident at the endpoint of the transport that the product has been rendered unsafe. For products such as vaccines this may result in loss of efficacy.

Certain vaccines degrade at a rate that depends on ambient temperature. As the loss of efficacy increases with temperature, it is desirable to maintain the temperature within the acceptable range (e.g. 2°C to 8°C).

It has been determined by the inventors that the best temperature equilibration results in the payload of a thermally insulated container are achieved when the PCM units are inserted into the container in a controlled, for example regular, manner, and such that their positions are restrained during use so that they do not move during transportation. It is also desirable the thermal insulation is not damaged during use. The efficacy of the thermal insulation is important to help ensure that the temperature within the payload volume remains within the desired temperature range throughout the journey. Therefore the thermal insulation should be sufficiently robust for transportation, and it is desirable to have a means of checking that the thermal insulation is not damaged prior to sealing the container.

To help minimise damage to the container during use, and in some instances to carry the container manually, it is desirable to have some means of easily lifting the container that can fully support the weight of the container and its contents. It is also desirable that the means for lifting the container will not accidentally snag on nearby objects, and can help to maintain the security of the container during transit, for example to help prevent the container from accidently opening during transit.

Accordingly, the present invention seeks to provide a thermally insulated container that mitigates at least one of the aforementioned disadvantages, or at least provides an alternative to known containers.

According to a first aspect there is provided a thermally insulated container according to claim 1. The invention provides a reusable thermal insulated container that has a robust structure, that is very well insulated, and that has a payload volume that is isolated from thermal insulation panels by an inner liner, without visually obscuring those thermal insulation panels, thereby allowing the thermal insulation panels to be visually inspected without removing the inner liner.

According to a second aspect, there is provided a thermally insulated transportation container for transporting temperature sensitive goods.

The container can include a main body.

The main body can include an outer shell.

The main body can include an inner liner, which defines a payload volume.

The main body can include a plurality of thermal insulation panels. The thermal insulation panels can be located between the outer shell and the inner liner. At least some of the thermal insulation panels can comprise vacuum insulation panels.

At least part of the inner liner can be transparent to facilitate visual inspection of the thermal insulation panels.

The container can include an opening member to provide access to the payload volume.

Each vacuum insulation panel can be covered by foam. For example, foam can be moulded over each vacuum insulation panel. The foam provides mechanical protection to the vacuum insulation panel and further thermal insulation.

The thickness of the foam can be greater at edges and/or corners of the vacuum insulation panel, for example, when compared with the thickness of the foam adjacent major sides of the vacuum insulation panel. This provides additional mechanical protection at the weakest parts of the vacuum insulation panel.

The inner liner can comprise a plastics material. The inner liner can be sealed for hygiene purposes, and is easy to clean.

The inner liner can be sealed. The inner liner having a sealed construction prevents moisture transfer between the payload volume and the thermal insulation panels. This helps to prevent moisture transfer from the payload volume to the vacuum insulation panels, and any foam present.

The inner liner can have vertical side walls. That is, the liner side walls can be arranged such that the side walls do not taper inwards, which maximises the payload volume, and helps to mount PCM units within the inner liner. PCM units can easily lie against vertical side walls. If the inner liner were to comprise a fully moulded single piece component, it is highly likely that the side walls would be tapered to enable the liner to be removed from the mould. In this arrangement, the liner would have a smaller payload volume and it would be more difficult to mount the PCM units and thermal insulation panels against the tapered side walls.

The container can include a seal, wherein the seal is arranged to seal the inner liner to the outer shell, to inhibit the ingress of moisture into gaps between the inner liner and outer shell.

The container can include a seal, wherein the seal is arranged to seal the inner liner to the opening member, to inhibit the ingress of ambient moisture into the inner liner.

The majority of the inner liner, or the entire inner liner, can be transparent. This facilitates visual inspection of the thermal insulation panels mounted adjacent front, rear, and lateral side walls, and the base of the container.

The inner liner can comprise at least one of: a base member; side walls; and an upper part. The base member can be attached to the side walls. The upper part can be attached to the side walls. The upper part can include a flange that overhangs the side walls.

The base member can be moulded. and The upper part can be moulded. The side walls can be formed from sheet material.

The thickness of the side walls can be less than the thickness of base member walls and/or thickness of upper member walls. This provides additional mechanical protection to the inner liner at its most vulnerable parts, which are the base member and upper member.

The outer shell can comprise a moulded component. The outer shell can be made from plastics material, such as polyethylene foam. This provides a relatively robust container and light weight container.

The outer shell can include at least one of: a front side wall; a rear side wall; a second lateral side wall; a first lateral side wall; and a base. The outer shell can be open at an upper end.

The outer shell can include channels formed in an outer surface of at least one of: the front side wall; the rear side wall; the second lateral side wall; the first lateral side wall; and the base. The channels can be arranged to receive straps from a harness. The outer shell can include channels formed in the outer surface of each of the front side wall; the rear side wall; the second lateral side wall; the first lateral side wall; and the base.

The outer shell can include a channel having a first part that extends vertically across the front side wall, a second part that extends horizontally across the base, and a third part that extends vertically across the rear side wall. The first, second and third parts of the channel can be aligned such that the channel enables a harness strap to loop around the base of the container, in a front to rear direction, without risk of the strap snagging on objects when the container is moved.

The outer shell can include a further channel having a first part that extends vertically across the front side wall, a second part that extends horizontally across the base, and a third part that extends vertically across the rear side wall. The first, second and third parts of the further channel can be aligned such that the further channel enables a harness strap to loop around the base of the container, in a front to rear direction, without risk of the strap snagging on objects when the container can be moved.

The outer shell can include a channel having a first part that extends vertically across the first lateral side wall, a second part that extends horizontally across the base, and a third part that extends vertically across the second lateral side wall. The first, second and third parts of the channel can be aligned such that the channel enables a harness strap to loop around the base of the container, in a left to right direction, without risk of the strap snagging on objects when the container can be moved.

The outer shell can include a further channel having a first part that extends vertically across the first lateral side wall, a second part that extends horizontally across the base, and a third part that extends vertically across the second lateral side wall. The first, second and third parts of the further channel can be aligned such that the further channel enables a harness strap to loop around the base of the container, in a left to right direction, without risk of the strap snagging on objects when the container can be moved.

The outer shell can include a channel that loops around an upper part of the outer shell, the channel having a first part that extends horizontally across the front side wall, a second part that extends horizontally across the first lateral side wall, a third part that extends horizontally across the rear wall, and a fourth part that extends horizontally across the second lateral side wall. The first, second, third and fourth parts of the further channel can be aligned such that the channel enables a harness strap to loop around an upper part of the container, without risk of the strap snagging on objects when the container can be moved.

At least one of the front side wall, the rear side wall, the second lateral side wall, the first lateral side wall and the base can include ribs formed thereon. The purpose of the ribs is to help control cooling of the outer shell during manufacture. The ribs also provide mechanical stiffness to the outer shell. The ribs can be arranged in rectangular formations.

Advantageously foam can be applied on the inside of the outer shell at edges where each pair of side walls meet. The foam provides additional mechanical protection, and improves thermal insulation at those edges.

The opening member can comprise a lid.

The opening member can include a channel formed in the upper surface of the opening member, said channel extending across the opening member from a front side to a rear side.

The opening member can include a further channel formed in the upper surface of the opening member, said further channel extending across the opening member from a front side to a rear side.

The container can include a harness arranged to enable a user to manually lift the container and/or to maintain the opening member in a closed position.

The harness can include a plurality of straps. For example, the harness can include a first strap. The harness can include a second strap. The harness can include a third strap. The harness can include a fourth strap. The harness can include a fifth strap. The harness can include at least one additional strap.

At least one of the straps can be connected to a first fastener. Preferably the first strap is connected to the first fastener. The first fastener is arranged to connect first and second ends of its strap together, and optionally to adjust the tension of the strap.

At least one of the straps can be connected to a second fastener. Preferably the second strap is connected to the second fastener. The second fastener is arranged to connect first and second ends of its strap together, and optionally to adjust the tension of the strap.

At least one of the straps can be connected to a first lifting handle. Preferably a plurality of straps are connected to the first lifting handle. Preferably the third and fourth straps are connected to the first lifting handle.

At least one of the straps can be connected to a second lifting handle. Preferably a plurality of straps are connected to the second lifting handle. Preferably the third and fourth straps are connected to the second lifting handle.

**In** some embodiments, the straps that are connected to the first and/or second lifting handles wrap around the base of the outer shell.

One of the straps can lie across the front side wall, the base, and the rear side wall, and that can be selectively laid over the opening member. Since the strap can be laid over the opening member, it can function to selectively maintain the opening member in the closed position. The strap can be seated within the channel formed in the outer shell, which includes the first part that extends vertically across the front side wall, the second part that extends horizontally across the base, and the third part that extends vertically across the rear side wall. The strap can be arranged to be seated in the channel formed in the upper surface of the opening member, from a front side to a rear side, when the further strap is laid over the opening member.

The first fastener is arranged to selectively connect first and second ends of the strap together. The first fastener can be arranged to enable tension in the strap to be adjusted, for example by looping the strap through a plurality of apertures in the first fastener.

The first fastener can comprise an over centred cam fastener, which can be connected to the first end of the strap, the over centred cam being arranged to selectively grip the second end of the strap. The first fastener can comprise a fastener having a first part attached to the first end of the strap and a second part attached to a second end of the strap, wherein the first and second parts are releasably connectable together, for example by way of a latching formation. The first fastener can comprise a fastener having a first part attached to the first end of the strap and a second part attached to a second end of the strap, wherein the first and second part of the fastener are releasably connectable together, for example by at least one magnet.

The container can include a first fixing member for fixing one end of the strap to the opening member. The first fixing member can be arranged to fix the second end of the strap to the opening member, and preferably within its respective channel formed in the opening member.

A further one of the straps can lie across the front side wall, the base, and the rear side wall, and that can be selectively laid over the opening member. Since the further strap can be laid over the opening member, it can function to selectively maintain the opening member in the closed position. The further strap can be seated within the further channel formed in the outer shell, which includes the first part that extends vertically across the front side wall, the second part that extends horizontally across the base, and the third part that extends vertically across the rear side wall. The further strap can be arranged to be seated in the further channel formed in the upper surface of the opening member, from a front side to a rear side, when the further strap is laid over the opening member.

The second fastener is arranged to selectively connect first and second ends of the further strap together. The second fastener can be arranged to enable tension in the further strap to be adjusted, for example by pulling the strap through a plurality of apertures formed in the second fastener.

The second fastener can comprise an over centred cam fastener, which can be connected to the first end of the strap, the over centred cam being arranged to selectively grip the second end of the strap. The second fastener can comprise a fastener having a first part attached to the first end of the strap and a second part attached to a second end of the strap, wherein the first and second parts are releasably connectable together, for example by way of a latching formation. The second fastener can comprise a fastener having a first part attached to the first end of the strap and a second part attached to a second end of the strap, wherein the first and second part of the fastener are releasably connectable together, for example by at least one magnet.

The container can include a second fixing member for fixing one end of the further strap to the opening member. The second fixing member can be arranged to fix the second end of the further strap to the opening member, for example within its respective further channel formed in the opening member.

One of the straps can lie across the first lateral side wall, the base, and the second lateral side wall. The strap can be seated within the channel formed in the outer shell, which includes the first part that extends vertically across the first lateral side wall, the second part that extends horizontally across the base, and the third part that extends vertically across the second lateral side wall. The first end of the strap can be attached to a first lifting handle and a second end of the strap can be attached to a second lifting handle.

A further one of the straps can lie across the first lateral side wall, the base, and the second lateral side wall. The further strap can be seated within the further channel formed in the outer shell, which includes the first part that extends vertically across the first lateral side wall, the second part that extends horizontally across the base, and the third part that extends vertically across the second lateral side wall. A first end of the further strap can be attached to the first lifting handle and a second end of the further strap can be attached to the second lifting handle.

The container can include a first recess arranged to store the first lifting handle.

The container can include a second recess arranged to store the second lifting handle.

At least one of the first and second recesses can be formed in the opening member. For example, the first recess can be formed adjacent a first lateral edge of the opening member. The second recess can be formed adjacent a second lateral edge of the opening member.

At least one of the first and second recesses can be at least partly U-shaped.

One of the straps can loop around an upper part of the main body. The strap can be arranged to lie across the front side wall, the first lateral side wall, the rear side wall and the second lateral side wall. The strap can be seated in the channel having a first part that extends horizontally across the front side wall, the second part that extends horizontally across the right lateral side wall, the third part that extends horizontally across the rear wall, and the fourth part that extends horizontally across the left lateral side wall.

In some embodiments the straps that are attached to the first and second fasteners, can instead be attached to the first and second lifting handles, and the straps that are attached to the first and second lifting handles can instead be attached to the first and second fasteners. In those embodiments, the channels in the opening member are preferably arranged to extend from the first lateral side to the second lateral side, and the first and second recesses are preferably located towards front and rear edges of the opening member.

At least some of the straps can be connected together at their respective intersections. The straps can be connected together by any suitable method, such as stitching. In some embodiments the straps are connected together at each site where two or more straps intersect.

At least one of the straps can be fixed to the outer shell. For example, the strap that loops around an upper part of the main body can be fixed to the outer shell.

The opening member can include at least one thermal insulation panel, and preferably includes a plurality of thermal insulation panels. At least one of the thermal insulation panels can include a vacuum insulation panel. Each vacuum insulation panel can be covered with foam.

The opening member can include an inner shell. The inner shell can comprise an inverted stepped partial pyramidal structure. The partial pyramidal structure can include first and second steps. At least one, and preferably both, of the first and second steps can be arranged to fit snuggly into the upper part of the inner liner. A first thermal insulation panel can be located in a cavity, which is at least partially formed by the first step. A second thermal insulation panel can be located in a cavity, which is at least partly formed by the second step.

The opening member can be pivotally attached to the main body. The opening member can be pivotally attached to the main body by straps from the harness. Additionally, or alternatively, The opening member can be pivotally attached to the main body by at least one hinge.

The container can include at least one PCM unit, and preferably a plurality of PCM units.

The or each PCM unit can comprise a sealable substantially rigid container for storing phase change material therein. The container can include a set of PCM units for mounting to the opening member. Typically, the number of PCM units in the set can be in the range 1 to 10, and preferably 2 to 7. The container can include additional PCM units mounted on at least one of the container walls, for example on at least one of a base, roof, front wall, rear wall and side wall.

The PCM units are arranged to be thermally conditioned prior to use such that the material within is uniformly in one physical state. During transit the PCM units absorb heat energy from, or supply heat energy to, their surroundings thereby causing the PCM within to change physical state over a period of time. The rigid arrangement of the PCM units also maintains temperature equilibriation of the storage volume by air conduction.

Typically, a PCM is selected to change physical state at a temperature greater than or equal to -80°C, preferably -60C and more preferably still -40C. Typically a PCM is selected to change physical state at a temperature less than or equal to 40°C, preferably 30C, and more preferably still 20C. Typically a PCM is selected to change physical state at a temperature in one of the following ranges: -80C to -60C; +2°C to +8°C; -25°C to -15°C; and +15 to +25°C. When it is required to maintain the temperature of the goods at around -20°C, preferably the PCM is a salt solution such as silver nitrate eutectic salt solution chosen to give a melting point of -20°C. Preferably the phase change material is selected to have at least one of the following thermal properties: a high latent heat energy of fusion per unit volume, a high specific heat energy capacity, low density, high thermal conductivity, small volume changes on phase transformation and low vapour pressure at operating temperatures.

Since the PCM units store the phase change material, in use, and the hollow container is substantially rigid, this ensures that the overall body of the PCM units is substantially rigid even when the PCM is in a liquid or solid state. The hollow container is preferably made from a polymer such as polyethylene.

The container can be arranged to include at least one PCM unit that will freeze during use, thus liberating heat energy, and at least one PCM unit that melts during use, thus absorbing heat energy. The set of PCM units can include a first PCM unit having a first PCM arranged to change phase at a first temperature and a second PCM unit having a second PCM arranged to change phase at a second temperature, wherein the first and second temperatures are different.

For example, when it is required to maintain the temperature of the goods in the range +2°C to +8°C, the first PCM can be selected to change phase at a temperature in the range -20°C to +5°C and the second PCM can be selected to change phase at a temperature in the range +5°C to +20°C. Preferably at least one of the PCM units is water-based with a melting point around 0°C, and may include additives such as acticides and nucleating agents; and preferably at least one of the PCMs can comprise a paraffin wax which has a melting point of around +5°C.

The container can include a set of PCM units that are arranged to be mounted together to form a hollow structure, wherein at least some of the PCM units in the set of PCM units include formations that are arranged to engage an adjacent PCM unit, thereby preventing the hollow structure from collapsing inwards during transit.

The container can include a first temperature sensor that can be arranged to measure the temperature inside the payload volume.

The container can include a second temperature sensor that can be arranged to measure ambient temperature.

The container can include a data logger arranged to record temperature readings from at least one of the first and second temperature sensors.

The container can include a first tagging formation located on at least one of the main body and the harness, and a second tagging formation located on the opening member, wherein, in a condition wherein the opening member is closed, the first tagging formation is located adjacent the second tagging formation. This enables a tamper proof tag to be applied to the first and second tagging formations.

The opening member can include recesses formed in an upper surface of the opening member that are arranged to receive feet of a separate container, so that the containers can be stacked.

According to a third aspect there is provided a thermally insulated transportation container for transporting temperature sensitive goods, said container including: a main body having an outer shell, an inner liner, which defines a payload volume, a plurality of thermal insulation panels located between the outer shell and the inner liner, wherein at least some of the thermal insulation panels comprise vacuum insulation panels, and at least part of the inner liner is transparent to facilitate visual inspection of the thermal insulation panels; and an opening member to provide access to the payload volume.

The third aspect of the invention can include any feature, or any combination of features, from the second aspect of the invention.

Embodiments of the invention will now be described by way of example only with reference to the accompanying drawings, in which:
Fig. 1 is an isometric view of a thermally insulated container according to a first embodiment of the invention;
Fig. 2 is a front view of the is a top view of the thermally insulated container of Fig. 1;
Fig. 3 is a top view of the thermally insulated container of Fig. 1;
Fig. 4 is a top view of the thermally insulated container of Fig. 1, with a data logger removed to show details located below the data logger;
Fig. 5 is an isometric view of a top part of the thermally insulated container of Fig. 1;
Fig. 6 is an enlarged view of part of Fig. 5;
Fig. 7 is an isometric view of the base of the thermally insulated container of Fig. 1;
Fig. 8 is a side view of the thermally insulated container of Fig. 1, with a lid in an open condition;
Fig. 9 is an isometric view of the thermally insulated container of Fig. 1, with the lid in an open condition;
Fig. 10 is an isometric view of a lifting harness, which is part of the thermally insulated container of Fig. 1;
Fig. 11 is a vertical cross-sectional view of the thermally insulated container of Fig. 1;
Fig. 11b is an enlarged cross-sectional view of an upper part of the view shown in Fig. 11;
Fig. 12 is a simplified horizontal cross-sectional view of the thermally insulated container of Fig. 1;
Fig. 13 is an enlarged cross-sectional view of a corner of a container outer shell, which is shown in Fig. 12;
Fig. 14 is an isometric view of a transparent inner liner, which is part of the thermally insulated container of Fig. 1.
Fig. 15 is a front view of the transparent inner of Fig. 14;
Fig. 16 is an exploded view of the transparent inner of Fig. 14;
Fig. 17 is an isometric view of a thermally insulated container according to a second embodiment of the invention;
Fig. 18 is a top view of the thermally insulated container of Fig. 17;
Fig. 19 is a top view of the thermally insulated container of Fig. 17, with a data logger removed to show details located below the data logger;
Fig. 20 is an isometric view of a top part of the thermally insulated container of Fig. 17;
Fig. 21 is an isometric view of the base of the thermally insulated container of Fig. 17;
Figs. 22 and 23 are isometric views of the thermally insulated container of Fig. 17, with the lid open;
Fig. 24 is an isometric view of a transparent inner liner, which is part of the thermally insulated container of Fig. 17;
Fig. 25 is an exploded view of the transparent inner of Fig. 24; and
Fig. 26 is a cross-sectional view of a thermally insulated container according to a third embodiment of the invention.

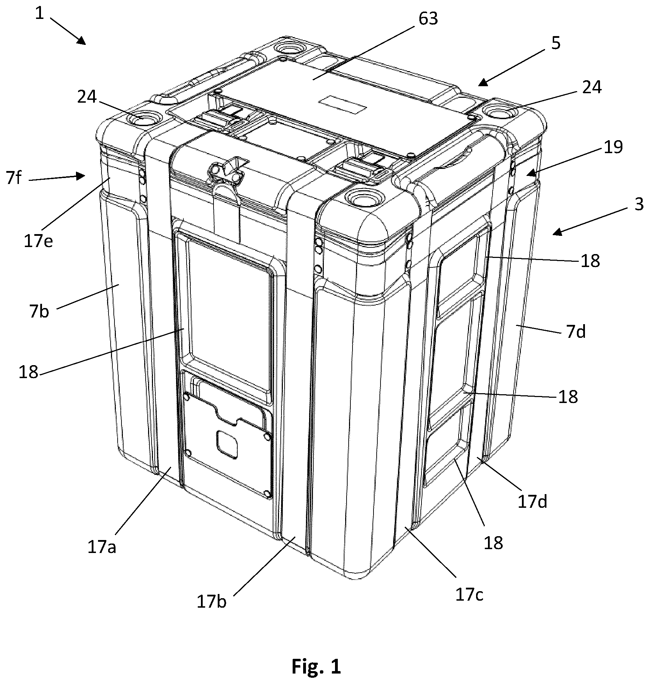

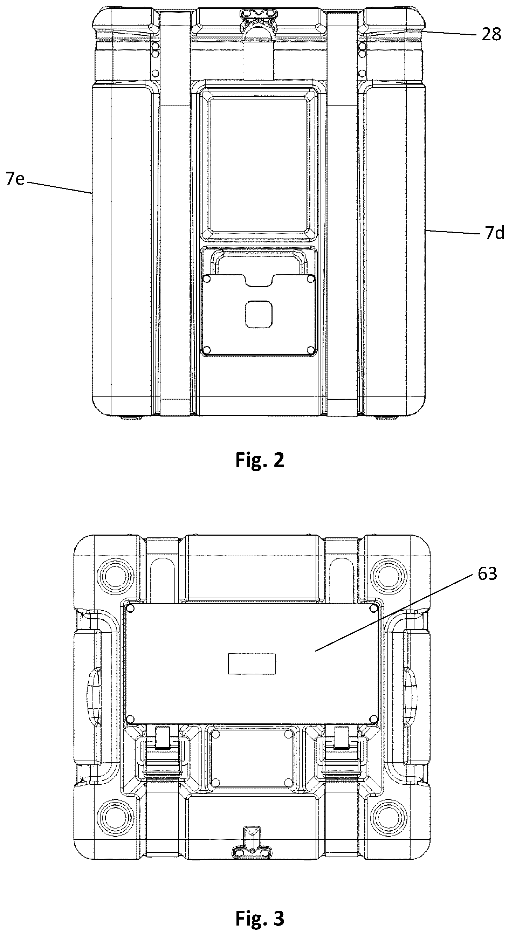

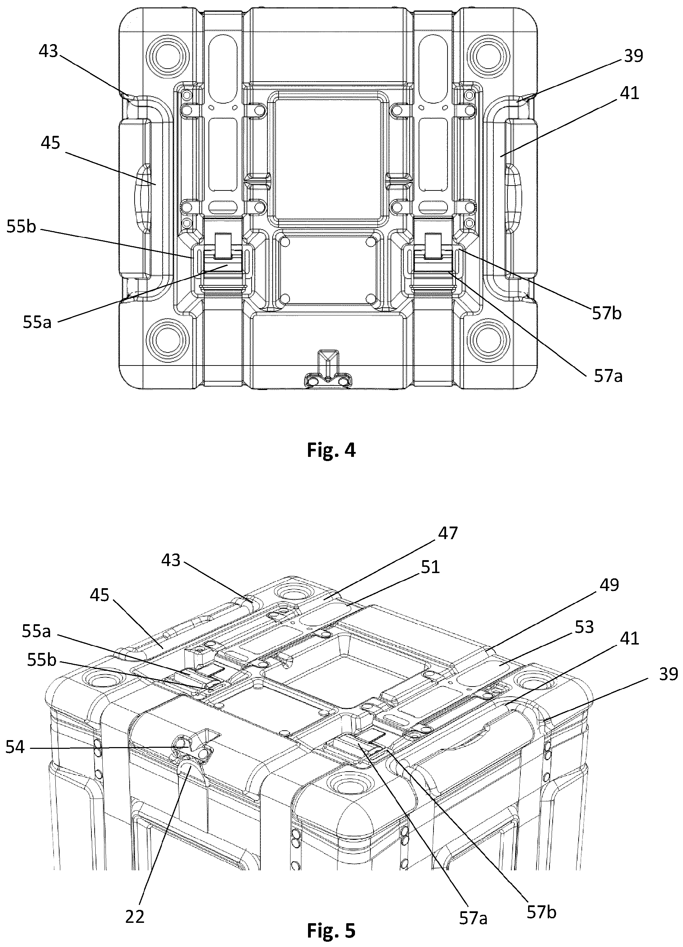

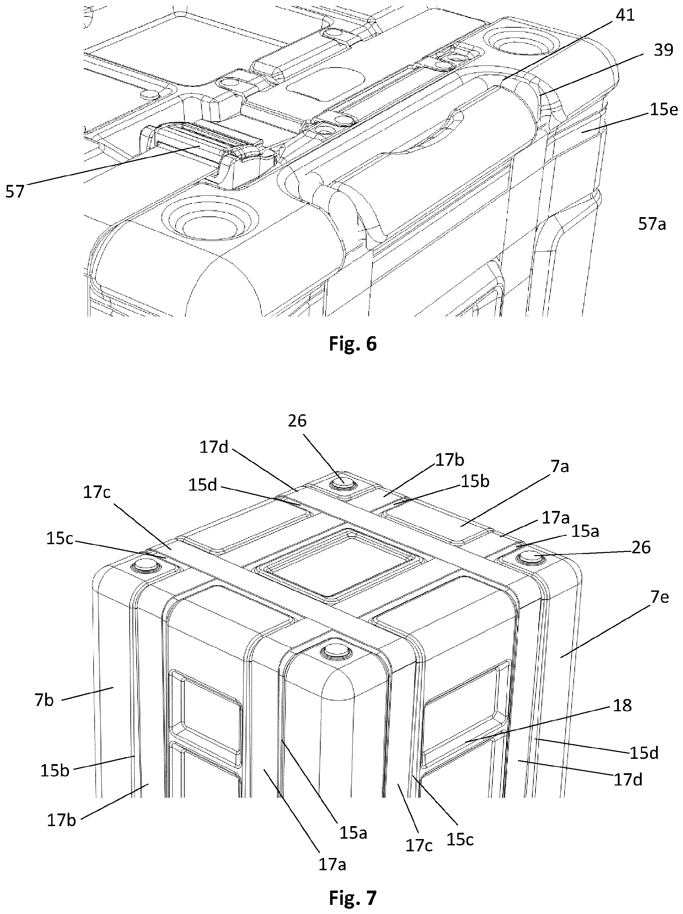

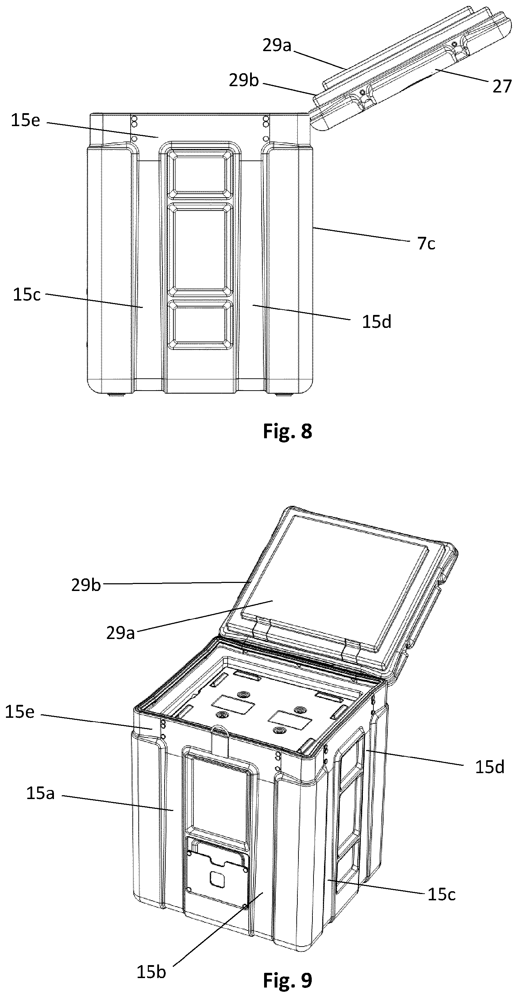

A thermally insulated container 1 (hereinafter referred to as the container 1) according to a first embodiment of the invention is shown in Figs. 1 to 16.

The container 1 can be used to transport goods, such as vaccines and transplant organs, for which it is required or desirable that they are maintained within a certain temperate range, for example at a temperature of between +2°C and +8°C. Insulated containers for different temperatures will be generally similar in construction, but may be modified as described in more detail below to maintain the required temperatures. For example, for some applications the internal temperature may be maintained in the range +15°C to + 25°C whereas for other applications, the internal temperature may be maintained in the range -25°C to -15°C.

The container 1 consists of a main body 3 and an opening member in the form of a lid 5, which is arranged to pivot with respect to the main body 3.

The main body 3 includes an outer shell 7, an inner liner 9 and thermal insulation panels 11 located between the inner liner 9 and the outer shell 7. A payload volume 13, in which temperature sensitive goods can be stored, is located within the inner liner 9.

The outer shell 7 provides structural rigidity and mechanical protection to the container. The outer shell 7 comprises a generally hollow cuboid shape, which is typically roto-moulded. The outer shell includes a base 7a, and side walls 7b-7e (a front side wall 7b, a rear side wall 7c, a right lateral side wall 7d, and a left lateral side wall 7e). An upper part 7f of the main body 3 is open. The lid 5 is located adjacent the upper part 7f and is arranged to pivot between open and closed positions, to selectively provide access to temperature sensitive goods stored within the container 1.

The outer shell 7 is made from a plastics material, such as polyethylene foam. Typically, the wall thickness of the outer shell 7 is in the range 3mm - 5mm.

The outer shell 7 includes channels 15a-e formed in its outer surface, which are each arranged to receive a respective strap 17a-e of a harness 19, that can be used to carry the container 1 and maintain the lid 5 in a closed condition. Each channel 15a-e comprises a relatively shallow depression formed in the outer surface of the outer shell 7, for example each channel may have a depth in the range 2mm - 10mm. The channels are formed during the moulding process, and the thickness of the outer shell 7 at the channels are typically in the range 3mm - 5mm.

A channel 15a has a first part that extends vertically across the front side wall 7b, a second part that extends horizontally across the base 7a, and a third part that extends vertically across the rear side wall 7c. A channel 15b has a first part that extends vertically across the front side wall 7b, a second part that extends horizontally across the base 7a, and a third part that extends vertically across the rear side wall 7c. Parts of the channels 15a and 15b that are formed into the same respective side 7b,7a,7c are arranged substantially parallel with one another. That is, the first part of the channel 15a is arranged parallel with the first part of the channel 15b. The second part of the channel 15a is arranged parallel with the second part of the channel 15b. The third part of the channel 15a is arranged parallel with the third part of the channel 15b.

A channel 15c has a first part that extends vertically across the right lateral side wall 7d, a second part that extends horizontally across the base 7a, and a third part that extends vertically across the left lateral side wall 7e. A channel 15d has a first part that extends vertically across the right lateral side wall 7d, a second part that extends horizontally across the base 7a, and a third part that extends vertically across the left lateral side wall 7e. Parts of the channels 15c and 15d that are formed into the same respective side 7d,7a,7e are arranged substantially parallel with one another, and are spaced apart from one another. That is, the first part of the channel 15c is arranged parallel with the first part of the channel 15d. The second part of the channel 15c is arranged parallel with the second part of the channel 15d. The third part of the channel 15c is arranged parallel with the third part of the channel 15d.

A channel 15e loops around an upper part of the main body 3. The channel 15e has a first part that extends horizontally across the front side wall 7b, a second part that extends horizontally across the right lateral side wall 7d, a third part that extends horizontally across the rear wall 7c, and a fourth part that extends horizontally across the left lateral side wall 7e.

The outer shell 7 can include an arrangement of ribs 18, wherein the thickness of the outer shell at the ribs is locally increased. The purpose of the ribs 18 is to better control part shrinkage following the roto-moulding manufacturing process. At least some, and preferably each of the main body walls 7a-e include an arrangement of ribs 18. The ribs 18 also improve the rigidity of the container body 3, and can help to protect the container from damage. Preferably each wall 7a-e includes at least one rib 18. The ribs 18 can be arranged on each wall 7a-e in the form of at least one rectangle, and preferably define a plurality of rectangles.

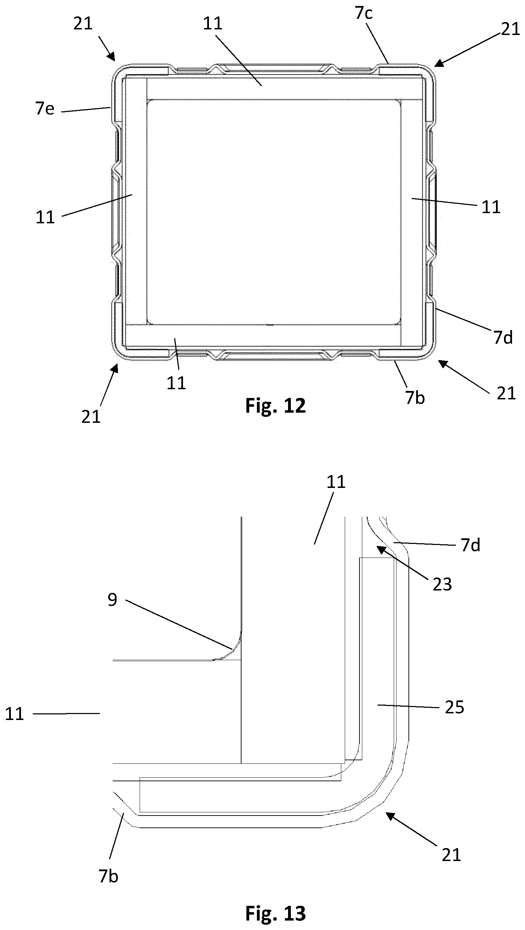

Figs. 12 and 13 illustrates diagrammatically that additional protection is applied at the edges 21 of the outer shell 7 where each pair of adjacent side walls (7b-7d; 7d-7c; 7c-7e; and 7e-7b) meet, to help protect the contents of the container 1. For example, each edge 21 of the outer shell 7 can bulge outwards from the thermal insulation panels 11 to create a respective internal cavity 23, which can be filled with foam 25, such as polyethylene foam, to protect edges of the thermal insulation panels 11. Additionally, or alternatively, the thickness of the outer shell 7 can be locally increased at the edges 21 of the outer shell to provide improved mechanical strength and impact resistance at the edges 21 and corners.

A first tagging formation in the form of D-shaped bracket 22 is attached to the front side wall 7b adjacent the open end of the main body 3. Alternatively, the D-shaped bracket 22 can be attached to the harness 19.

The lid 5 is pivotally attached to the main body 3, adjacent the open side of the main body 3. Typically the lid 5 is hinged to an upper part of the main body, and is preferably hinged to the rear side wall 7c. Additionally, or alternatively, the harness 19 can pivotally attach the lid 5 to the main body 3.

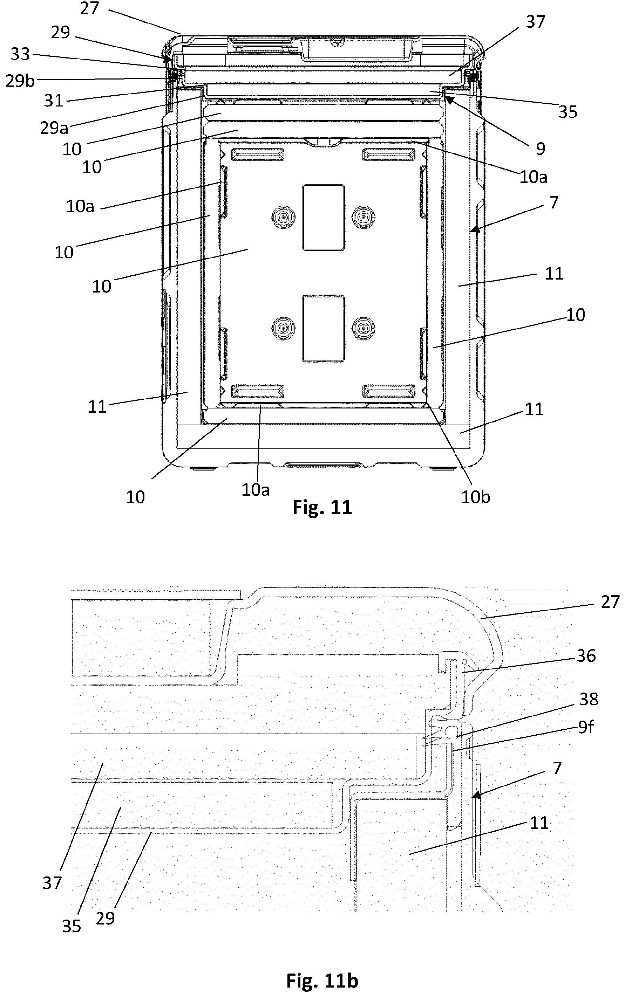

The lid 5 includes an outer shell 27, which is typically roto-moulded. The outer shell 27 is made from a plastics material, such as polyethylene foam. Typically, the wall thickness of the outer shell 27 is in the range 3mm - 5mm. The lid 5 includes an inner shell 29, which is typically roto-moulded. The inner shell 29 is made from a plastics material, such as polyethylene foam. Typically, the wall thickness of the inner shell is in the range 3mm - 5mm. The inner shell 29 has an inverted stepped partial pyramidal structure, comprising three steps (see Figure 11). The inner shell 29 is releasably attached to an inner side of the outer shell 27. The inner shell 29 and outer shell 27 define a cavity, which can be notionally split into a first cavity 31, which is defined by a step 29a, and a second cavity 33, which is defined by a step 29b. The first cavity 31 is arranged to receive a thermal insulation panel 35. The second cavity 33 is arranged to receive a thermal insulation panel 37. The thermal insulation panels 35,37 insulate the lid 5 thereby reducing the rate at which heat enters the payload volume via the lid 5. A seal 36 is provided to seal the inner shell 29 to the outer shell 27. The seal 36 is arranged to minimise / eliminate moisture ingression into the lid 5. The seal 36 can be arranged to hook over an upper part of the inner shell 27, to retain the location of the seal 36.

The lid 5 includes a first recess 39 that is arranged to receive a first lifting handle 41. The first recess 39 is formed in the outer shell 27. The first recess 39 is preferably located at a right lateral side of the lid 5. The first recess 39 preferably includes a u-shaped portion. The lid includes a second recess 43 that is arranged to receive a second lifting handle 45. The second recess 43 is formed in the outer shell 27. The second recess 43 is preferably located at a left lateral side of the lid 5. The second recess 43 preferably includes a u-shaped portion.

The lid 5 includes a channel 47 that is arranged to receive a harness strap, the channel 47 extends from a front side to a rear side and is aligned with the channel 15a. In particular, the channel 47 is aligned with the first and third parts of the channel 15a, and is arranged parallel with the second part of the channel 15a. The lid 5 includes a channel 49 that is arranged to receive a harness strap, the channel 49 extends front to rear, and is aligned with the channel 15b. In particular, the channel 49 is aligned with the first and third parts of the channel 15b, and is arranged parallel with the second part of the channel 15b.

A first fixing member 51 is located in the channel 47, and is arranged to tension a respective harness strap 17a during the assembly process, and to fix an end of the strap to the lid 5. The first fixing member 51 is fixed to the lid 5 during the assembly process. The first fixing member 51 comprises a metal plate, which is attached to one end of a harness strap, and then pulled to its fixing position on the lid, thereby fixing the respective strap.

A second fixing member 53 is located in the channel 49, and is arranged to tension the respective harness strap 17b during the assembly process, and to fix an end of the strap to the lid 5. The second fixing member 53 is fixed to the lid 5 during the assembly process. The second fixing member 53 comprises a metal plate, which is attached to one end of a harness strap, and then pulled to its fixing position on the lid, thereby fixing the respective strap.

The lid 5 includes a second tagging formation, in the form of a bracket 54, located at a front side of the lid. When the lid is in a closed position, the bracket 54 is located adjacent to the bracket 22. A tamper proof seal (not shown) can be attached to the brackets 22,54, so that it would be evident if the container 1 were to be opened during transit.

The lid 5 includes a plurality of recesses 24 that are arranged to receive container feet, similar to feet 26, when one container 1 is stacked on top of another. Each recess is formed in an upper surface the outer shell 27. Preferably the lid 5 includes four recesses 24, one located towards each corner of the lid.

The lid 5 has a profiled undercut 28 on at least one of a front edge, a right lateral edge and a left lateral edge, which is arranged to facilitate opening of the lid. The undercut 28 enables a user to manually access the edge of the lid.

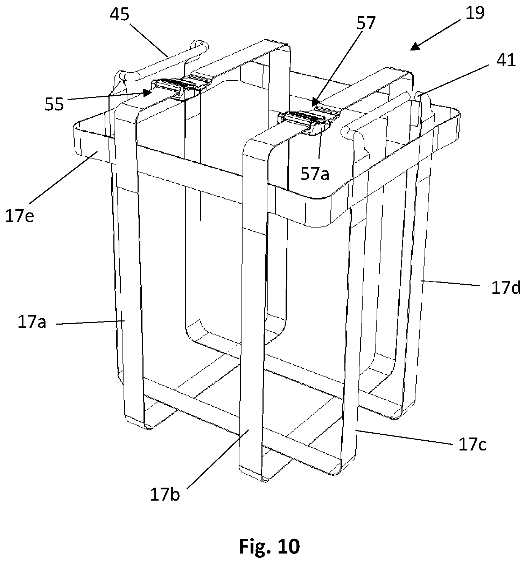

The harness 19 is arranged to support the weight of the container 1, and the goods stored therein, in a manner that enables the container 1 to be lifted via the harness. The harness 19 also functions to help maintain the lid 5 in the closed condition during transportation. The harness 19 is shown in Fig. 10.

The harness 19 includes a first strap 17a, which is arranged to loop around the main body 3 and lid 5. The first strap 17a is arranged to be seated in the channels 15a and 47, accordingly the first strap 17a lies across the lid 5, the front side wall 7b, the base 7a and the rear side wall 7c. The first strap 17a includes first and second ends, and means for releasably connecting the first and second ends of the strap together. Any suitable means can be used, for example there are a wide variety of fasteners 55 available that enable ends of a strap to be quickly attached together and released, and that enable the strap to be tensioned. The fastener 55 can be arranged to have a first part that is attached to a first end of the strap 17a and a second part attached to a second end of the strip 17a, wherein the first and second parts are releasably attachable together, for example via a clipping or latching arrangement. Other suitable fasteners 55 include a Fidlock^{®} "Hook" fasteners, having a first part that is attached to a first end of the strap 17a and a second part attached to a second end of the strip 17a, and at least one of the first and second parts includes a magnet which connects the first and second parts together, which facilitates fast attachment and release. **In** either case, at least one of the first and second parts includes an arrangement that enables the effective length of the strap to be adjusted, thereby increasing / decreasing tension in the strap. Another suitable type of fastener 55 is an over cam centred fastener. A first end of the first strap 17a can be connected to an over centred cam fastener, and the second end, which is free, can be fed through the fastener, and can be gripped by the over centred cam fastener.

The first tensioning member 51 is arranged to tension the first strap 17a.

The harness 19 includes a second strap 17b, which is arranged to loop around the main body 3 and lid 5. The second strap 17b is arranged to be seated in the channels 15b and 49, accordingly the second strap 17b lies across the lid 5, the front side wall 7b, the base 7a and the rear side wall 7c. The second strap 17b includes first and second ends, and means for releasably connecting the first and second ends of the strap together. Any suitable means can be used, for example there are a wide variety of fasteners 57 available that enable ends of a strap to be quickly attached together and released, and that enable the strap to be tensioned. The fastener 57 can be arranged to have a first part that is attached to a first end of the strap 17b and a second part attached to a second end of the strip 17b, wherein the first and second parts are releasably attachable together, for example via a clipping or latching arrangement. Other suitable fasteners 57 include a Fidlock^{®} "Hook" fasteners, having a first part 57a that is attached to a first end of the strap 17b and a second part 57b attached to a second end of the strip 17b, and at least one of the first and second parts includes a magnet which connects the first and second parts together, which facilitates fast attachment and release. In either case, at least one of the first and second parts includes an arrangement that enables the effective length of the strap to be adjusted, thereby increasing / decreasing tension in the strap. Another suitable type of fastener 57 is an over cam centred fastener. A first end of the second strap 17b can be connected to an over centred cam fastener 57, and a second end, which is free, that can be fed through the fastener, and can be gripped by the fastener.

The second tensioning member 53 is arranged to tension the second strap 17b.

Preferably, the first fastener 55 is similar to the second fastener 57, however this is not a strict requirement.

The harness 19 includes a third strap 17c, which is arranged to loop around the main body 3. The third strap 17c is arranged to be seated in channel 15c, accordingly the third strap 17c lies across the right lateral side wall 7d, the base 7a and the left lateral side wall 7e. The third strap 17c has a first end that is connected to the first lifting handle 41. The third strap 17c has a second end that is connected to the second lifting handle 45.

The harness 19 includes a fourth strap 17d, which is arranged to loop around the main body 3. The fourth strap 17d is arranged to be seated in channel 15d, accordingly the fourth strap 17d lies across the right lateral side wall 7d, the base 7a and the left lateral side wall 7e. The fourth strap 17d has a first end that is connected to the first lifting handle 41. The fourth strap 17d has a second end that is connected to the second lifting handle 45.

When the first lifting handle 41 is not in use, for example while the container 1 is transported by a vehicle, the handle 41 is seated in the first recess 43. Likewise, when the second lifting handle 45 is not in use, the handle 45 is seated in the second recess 47. Since the lifting handles 41,45 are seated in their respective recesses 43,47 they are unlikely to snag on protruding objects, for example when loaded on to and removed from the vehicle. The lifting handles 41,45 can be arranged to lie approximately flush with the outer surface of the lid adjacent the handles 41,45, or slightly below the outer surface of the lid adjacent the handles 41,45, when located in their respective recesses 43,47. To use the lifting handles 41,45, a user removes the lifting handles 41,45 from their respective recesses 43,47, and the handles 41,45 are manually gripped. Depending on the weight of the container 1, it may be desirable for the container 1 to be carried by two persons.

The harness includes a fifth strap 17e that loops around an upper part of the main body 3. The fifth strap 17e is arranged to be seated in the channel 15e.

Figs. 1 to 7, show how the harness 19 is applied to the container 1.

Optionally, the straps 17a-e can be connected together, for example by stitching, so that the harness 19 can be applied to, and removed from, the container 1 in a unitary fashion. For example, at least some, and preferably each, of the first, second, third and fourth straps 17a,17b,17c,17d can be attached to the fifth strap 17e, in the respective regions where the first, second, third and fourth straps 17a,17b,17c,17d overlap the fifth strap 17e. The first strap 17a can be attached to the third strap 17c in the region where the first strap 17a overlaps the third strap 17c. The first strap 17a can be attached to the fourth strap 17d in the region where the first strap 17a overlaps the fourth strap 17d. The second strap 17b can be attached to the third strap 17c in the region where the second strap 17b overlaps the third strap 17c. The second strap 17b can be attached to the fourth strap 17d in the region where the second strap 17b overlaps the fourth strap 17d.

Optionally, the harness 19 can be attached to the main body 3. The harness 19 can be attached to the main body 3 by any suitable means, which may include pins 59. For example, the pins 59 can secure the fifth strap 17e to the main body.

Each strap 17a-e comprises a flexible fabric such as woven polyester.

A significant advantage of the harness 19 design is that it wraps around the base of the container, which means that when lifting the container 1, the entire weight of the container is supported by the harness 19, and the harness 19 does not rely on loads being transferred through the outer shell 7.

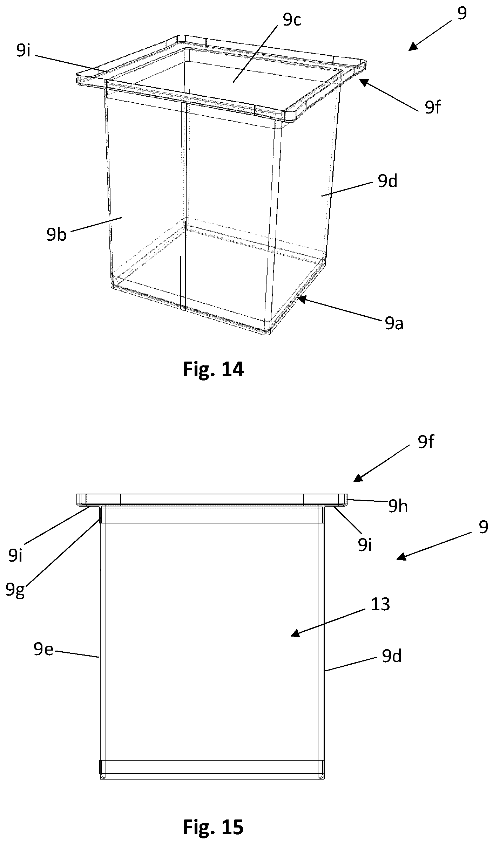

The inner liner 9 comprises a thin walled inner container that sits within the outer shell 7 (see Figs. 14 to 16). The inner liner 9 includes a base 9a, a front side wall 9b, a rear side wall 9c, a right lateral side wall 9d, and a left lateral side wall 9e. The inner liner 9 is open at its upper end. The inner liner 9 is made from thermally insulating material, and typically a plastics material such as polyethylene terephthalate (PET) or polycarbonate. The inner liner 9 is arranged to contain any spillages, for example any leaks from the goods transported or from the PCM units 10 located within the inner liner 9. Since the inner liner 9 is made from a plastics material, the inner liner 9 is easy to clean. The inner liner 9 is transparent or is at least partly transparent. Since the thermal insulation panels 11 are located between the inner liner 9 and the outer shell 7, having a transparent inner liner 9, enables visual inspection of the thermal insulation panels 11. This can provide an indication as to whether any of the thermal insulation panels have been damaged during transit and may need replacing prior to the container being reused.

The inner liner 9 is constructed from three parts: a base 9a; side walls 9b-e; and an upper support 9f.

The base 9a comprises a moulded component that has a planar portion 9a1 and side walls 9a2 that protrude upwards from the planar portion 9a1 around the periphery of the planar portion 9a1. The side walls 9a2 help to maintain any liquid that has leaked from the goods or PCM units 10 within the inner liner 9. The thickness of the base 9a walls is typically around 2mm.

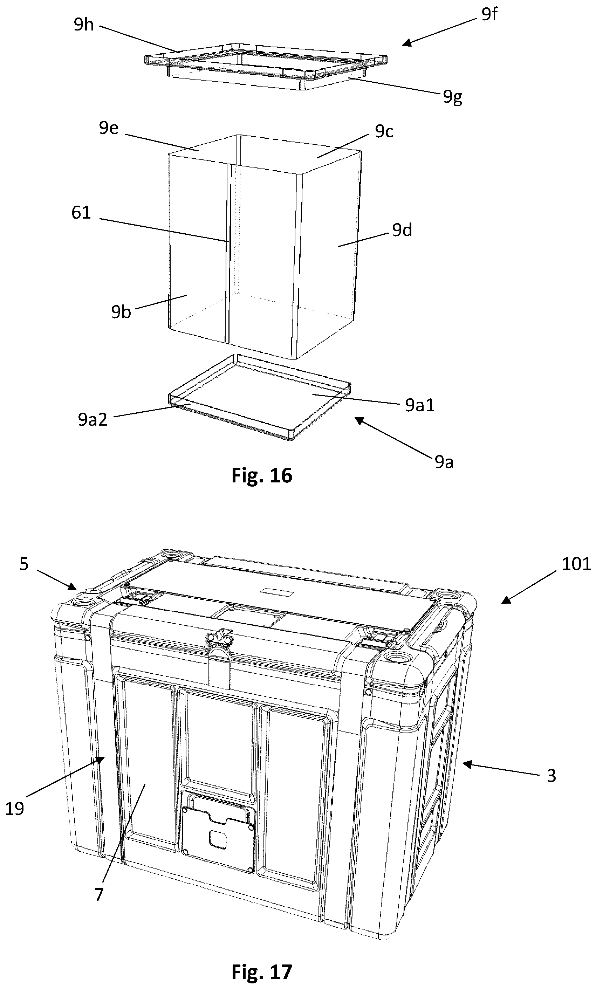

The side walls 9b-e are made from a sheet of plastics material, that is wrapped around a cuboid former, wherein two opposite edges of the sheet material overlap are fixed together along a seam 61, thereby creating a cuboid tubular structure comprising side walls 9b-e (see Fig. 16). The sheet material is typically relatively thin in comparison to the base, for example the sheet material can have a thickness of around 0.5mm. The opposite edges of the sheet material can be fixed together at the seam by any suitable means, for example tape, glue and/or a welding process. The tubular structure is fitted over the base 9a, so that the base 9a closes off one end of the tubular structure. The tubular structure is attached to the base 9a by any suitable means, for example by tape, glue and/or a welding process

The upper support 9f is moulded. The upper support 9f includes a first tubular part 9g having a first rectangular transverse cross-section, and a second tubular part 9h having a second rectangular transverse cross-section. The area of the second rectangular transverse cross-section is greater than the area of the first rectangular cross-section. The second tubular part 9h is connected to the first tubular part 9g by a flange 9i. The first tubular part 9g is sized and shaped to fit snugly within, or snuggly against an outer surface of, an upper part of cuboid tubular structure comprising side walls 9b-e. The upper support 9f is attached to the cuboid tubular structure comprising side walls 9b-e by any suitable means, such as tape, glue and/or welding. The thickness of the walls of the upper support 9f is typically around 2mm.

Thus the base 9a and upper support 9f have thicker walls (approximately 2mm) than the side walls 9b-e (approximately 0.5mm), which provides improved puncture resistance and strength at those parts of the inner liner 9 that are more likely to be damaged, for example during an assembly processes, or when removing the internal liner 9 for cleaning.

Due to the preferred method of manufacture of the inner liner 9, it is possible to produce an inner liner 9 that has vertical side walls 9b-e. While the inner liner 9 could be moulded, if the inner liner 9 was made by a moulding processing, it would most likely be necessary to taper the side walls of the inner liner 9 so that it could be removed from the mould, in that case, the inner liner 9 would have inclined side walls 9b-e.

A seal 38 is provided, which seals the outer shell 7 to the inner liner 9. In particular, the seal 38 seals the upper support 9f to an upper part of the outer shell 7. The seal 38 minimises / eliminates the ingress of moisture between the outer shell 7 and inner liner 9, that is, in the space housing the thermal insulation panels 11. The seal 38 can engage at least one of the thermal insulation panels 11, and preferably engages each of the thermal insulation panels 11 mounted adjacent the side walls 7b-e of the outer shell. The seal 38, or a further seal, seals the inner liner 9 to the lid 5, in particular to the inner shell 29, and thereby minimising /eliminating the ingress of moisture into the inner liner 9 via a gap between the lid 5 and the inner liner 9.

The thermal insulation panels 11 each have a low thermal conductivity value, and therefore thermally insulate the payload volume. Each thermal insulation panel 11 comprises a vacuum insulation panel (VIP) 11.

The thermal insulation panels 11 are located within the outer shell 7, to thermally insulate the payload volume. In the current embodiment, five thermal insulation panels 11 are inserted into the outer shell 7. One thermal insulation panel 11 is located on top of the base 7a, and each other thermal insulation panel 11 is mounted against a respective one of the outer shell side walls 7b-7e (see Figs. 11 and 12). It can be seen that the insulation panels 11 are sized to fit snugly within the outer shell 7, thereby providing high quality insulation to the payload volume 13. The inner liner 9 is then inserted into the container to help maintain the positions of the thermal insulation panels 11 with respect to the outer shell 7.

It can be seen from Figs. 14 and 15 that the inner liner flange 9i overhangs the side walls 9b-e. Fig 11 shows that underside of flange 9i rests on upper surfaces of the thermal insulation panels 11 mounted against the side walls 7b-e, which helps to maintain the thermal insulation panels 11 against the outer shell side walls 7b-e. It can also be seen from Fig. 11 that when the lid 5 is in the closed position, steps 29a,29b of the inner shell 29 sit within the upper support 9f of the inner liner, and thereby help to maintain the thermal insulation panels 11 against the outer shell side walls 7b-e, and prevent the thermal insulation panels 11 from moving in a vertical direction.

The thermal insulation panels 33,35 are similar in structure to the thermal insulation panels 11, however the size is smaller to fit within their respective cavities 31,33. Accordingly, the lid 5 provides excellent thermal insulation for the payload volume 13.

The container 1 includes a plurality of phase change material (PCM) units 10. The number of PCM units 10 used will depend on the size of the container 1, and the PCM unit size. In the embodiment of Fig. 1, seven PCM units 10 are used.

Each PCM unit 10 is preferably in the form or a phase change material panel (PCMP). Each PCM unit 10 comprises a hollow container made from a polymer such as polyethylene and is filled with a PCM. The PCM used is dependent on the temperature characteristics that the payload requires. For example, when the goods being transported need to be kept at a temperature in the range +2°C to +8°C, the following PCMs can be used: filtered water, preferably having two acticides: DB20, which is fast acting, and MBS, which is slower acting; and a paraffin wax (for example, mostly n-tetradecane). Each PCM unit 10 is filled via an opening in the container, which is then sealed with a foil seal and covered with a protective polythene cap. Alternatively, the cap can be spun welded to the container body, or can comprise a screw cap or bung.

Each PCM unit 10 container is substantially planar in that it has a large surface area when viewed in plan and a relatively small depth. Each PCM unit 10 includes an arrangement of protrusions 10a, which protrude outwards from a major surface of the PCM unit 10. Each PCM unit 10 includes profiled edges 10b, for example edges that are chamfered and/or recessed, and which are arranged to engage with the protrusions 10a. Some protrusions 10a can interact with other protrusions 10a or recesses formed on an adjacent PCM unit 10. The protrusions 10a are arranged to engage with adjacent PCM units 10 in order to prevent the PCM units 10 from collapsing inwards during transportation. Thus, the PCM units 10 are self-supporting.

An advantage of the invention is that for each of the temperature ranges +2°C to +8°C; -25°C to -15°C; +15°C to +25°C it is only necessary to have one set of PCM panels (one different set for each temperature range) for any destination, that is regardless as to whether the container is being sent to a relatively hot country or a relatively cold country. This is because of the thermal stability achieved by the invention.

In use, prior to loading the container 1, each of the PCM units 10 is conditioned by cooling (or heating) to predetermined temperatures. For example, PCM units 10 containing a PCM that changes phase at 0°C, are cooled to a temperature of around -20°C and the PCM units 10 containing a PCM that changes phase at +5°C, are cooled to a temperature of around +6 °C.

The PCM units 10 are then loaded into the inner liner 9. One of the PCM units 10 is mounted towards the base 9a. PCM units 11 are placed against each of the side walls 9b-e of the inner liner. At this stage, the goods to be transported are placed into the payload volume 13. Two further PCM units 10 are then placed on top of the PCM units 10 mounted against the inner liner side walls 9b-e (see Fig. 11) to close off the payload volume 13.

A data logger 63 is mounted on the lid 5. The data logger 63 is arranged to receive signals from at least one temperature sensor, and to record temperature readings throughout transportation so it will be clear to the user if the temperature should stray outside of the desired temperature range at any time during transportation. Preferably, the container 1 includes a temperature sensor (not shown), which measures the internal temperature of the payload volume 13, and the data logger records the internal temperature throughout transportation. Preferably, the container 1 includes a temperature sensor (not shown), which measures ambient temperature, and the data logger records ambient temperature throughout transportation.

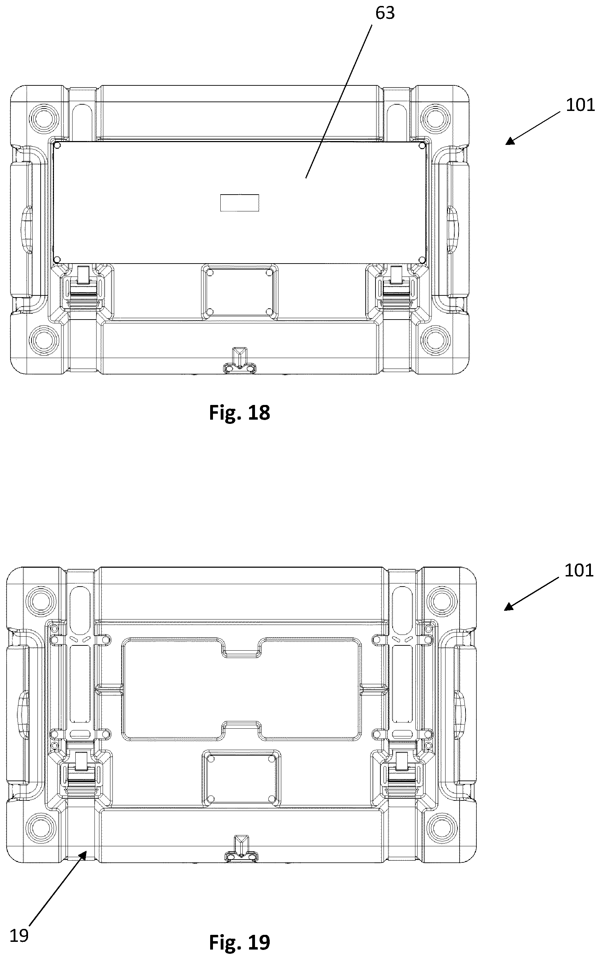

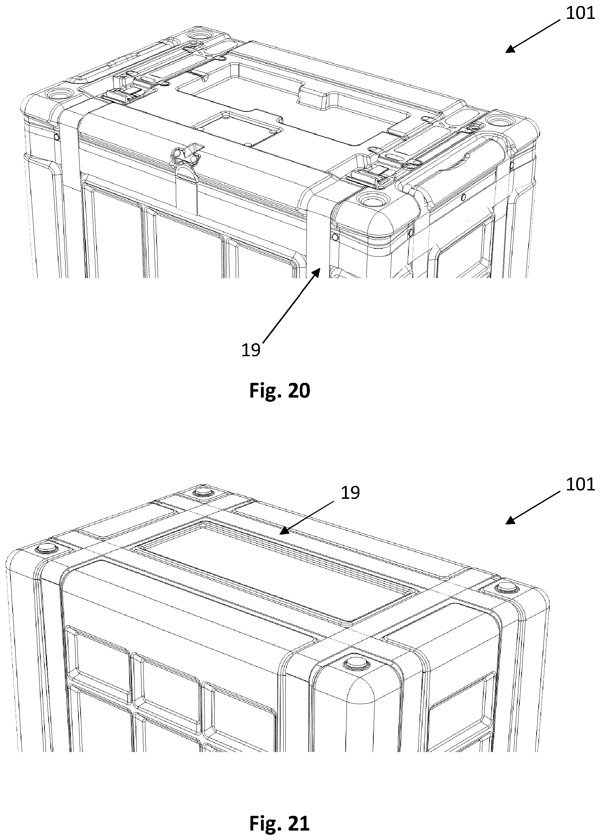

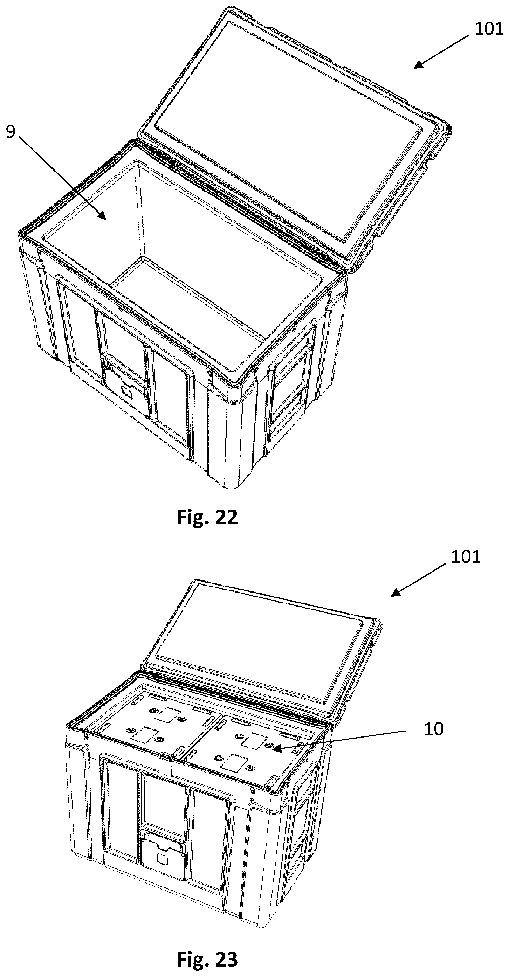

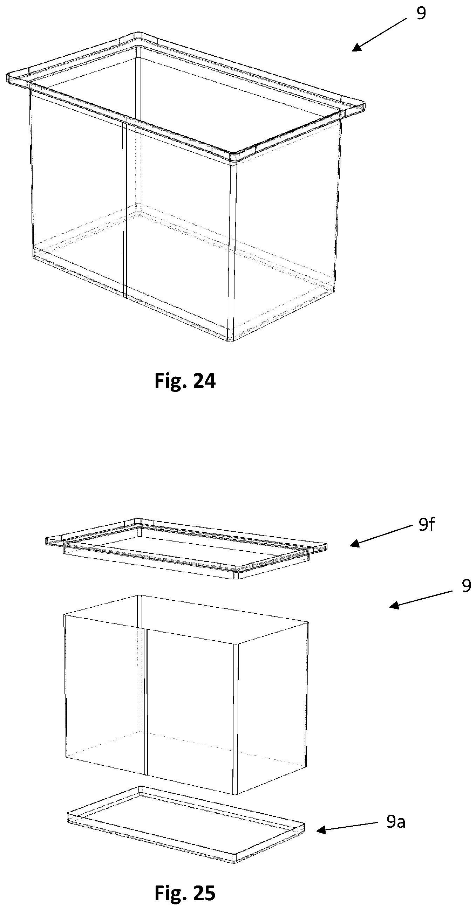

A container 101 according to a second embodiment of the invention is shown in Figs. 17 to 24. The second embodiment is similar to the first embodiment, for example the container 101 includes: a main body 3 having an outer shell 7, a transparent inner liner 9 having an upper part 9f, a base 9a and side walls, and thermal insulation panels located between the inner liner 9 and the outer shell 7; a lid 5, which is arranged to pivot with respect to the main body 103; PCM units 10, a harness 19; a data logger 63 and temperature sensors.

The second embodiment differs from the first embodiment in that the volume of the container 101 is larger than the container 1 of first embodiment, approximately twice that of the first embodiment. For example, the container 1 of first embodiment can have a 26 litre capacity and the container 101 of the second embodiment can have a 57 litre capacity. The number of PCM units 10 for the second embodiment is adjusted accordingly, for example the container 101 can include 12 PCM units 10.

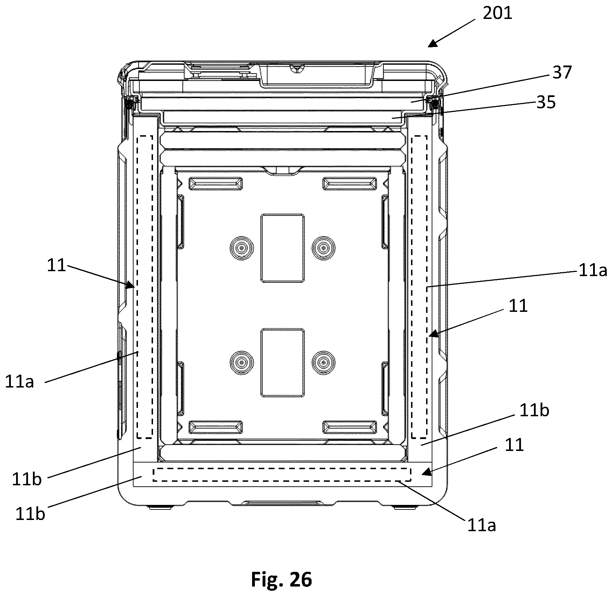

A container 201 according to a third embodiment of the invention is shown in Fig. 26. The container 201 is similar to the container 1 of the first embodiment except that at least one, preferably a plurality, and more preferably each, of the thermal insulation panels 11 includes a vacuum insulation panel (VIP) 11a, which is surrounded by a layer of foam 11b. This is shown diagrammatically in Fig. 26, which is a modified version of Fig. 11. The foam 11b is thermally insulating and also provides mechanical protection to the VIP 11a. The foam 11b is arranged to absorb loads applied to the thermal insulation panel 11, for example due to the container 1 vibrating during transportation. The foam 11b is thicker towards corners and edges of the VIP 11a to provide additional protection at the most vulnerable parts of the VIP 11a. For example, the thickness of the foam across the major surfaces of the VIP can be around 5mm mm, and the thickness of the foam at the thin edges can be around 10mm.

The thermal insulation panels 35,37 can be arranged similar to the thermal insulation panels 11 of the third embodiment or the thermal insulation panels 11 of the first embodiment, but are sized and shaped accordingly to fit within their cavities.

It will be appreciated that modifications can be made to the aforementioned embodiments that fall within the scope of the claims, for example alternative fasteners can be used in the harness. Any suitable type of fasteners can be used.

It will be appreciated that the straps that are attached to the first and second fasteners, can instead be attached to the first and second lifting handles, and the straps that are attached to the first and second lifting handles can instead be attached to the first and second fasteners. In this scenario, the channels in the opening member would be arranged to extend from the first lateral side to the second lateral side, and the first and second recesses would be located towards front and rear edges of the opening member.

The description presents exemplary embodiments and, together with the drawings, serves to explain principles of the invention. However, the scope of the invention is not intended to be limited to the precise details of the embodiments, since variations will be apparent to a skilled person and are deemed also to be covered by the claims. Terms for components used herein should be given a broad interpretation that also encompasses equivalent functions and features. In some cases, several alternative terms (synonyms) for structural features have been provided but such terms are not intended to be exhaustive.

Descriptive terms should also be given the broadest possible interpretation; e.g. the term "comprising" as used in this specification means "including" such that interpreting each statement in this specification that includes the term "comprising", features other than that or those prefaced by the term may also be present. Related terms such as "comprise" and "comprises" are to be interpreted in the same manner. Directional terms such as "vertical", "horizontal", "up", "down", "upper" and "lower" may be used for convenience of explanation usually with reference to the illustrations and are not intended to be ultimately limiting if an equivalent function can be achieved with an alternative dimension and/or direction.

The description herein refers to embodiments with particular combinations of configuration steps or features, however, it is envisaged that further combinations and cross-combinations of compatible steps or features between embodiments will be possible. Indeed, isolated features may function independently as an invention from other features and not necessarily require implementation as a complete combination. Any feature from an embodiment can be isolated from that embodiment and included in any other embodiment.

## Claims

1. A thermally insulated transportation container for transporting temperature sensitive goods, said container including:
a. a main body having
i. an outer shell including a front side wall, a rear side wall, a first lateral side wall, a second lateral side wall, and a base,
ii. an inner liner, which defines a payload volume, and
iii. a plurality of thermal insulation panels located between the outer shell and the inner liner;
b. an opening member to provide access to the payload volume;
c. a harness arranged to enable a user to manually lift the container and/or to maintain the opening member in a closed position, wherein the harness includes a plurality of straps and a first tagging formation located on the harness; and
d. wherein the opening member is pivotally attached to the main body by harness straps; the opening member includes a second tagging formation, and in a condition wherein the opening member is closed, the first tagging formation is located adjacent the second tagging formation.

2. The container of claim 1, wherein outer shell comprises a moulded component made from plastics material, such as polyethylene foam; preferably at least one of the front side wall, the rear side wall, the second lateral side wall, the first lateral side wall includes ribs formed thereon.

3. The container of any one of claim 1 or 2, wherein the outer shell includes channels formed in an outer surface of at least one of: the front side wall; the rear side wall; the second lateral side wall; the first lateral side wall; and the base wherein the channels are arranged to receive straps from a harness.

4. The container of claim 3, including a channel having a first part that extends vertically across the front side wall, a second part that extends horizontally across the base, and a third part that extends vertically across the rear side wall; preferably including a further channel having a first part that extends vertically across the front side wall, a second part that extends horizontally across the base, and a third part that extends vertically across the rear side wall.

5. The container of claim 3 or 4, including a channel having a first part that extends vertically across the first lateral side wall, a second part that extends horizontally across the base, and a third part that extends vertically across the second lateral side wall; preferably including a further channel having a first part that extends vertically across the first lateral side wall, a second part that extends horizontally across the base, and a third part that extends vertically across the second lateral side wall.

6. The container of any one of claims 3 to 5, including a channel that loops around an upper part of the outer shell, the channel having a first part that extends horizontally across the front side wall, a second part that extends horizontally across the first lateral side wall, a third part that extends horizontally across the rear wall, and a fourth part that extends horizontally across the second lateral side wall.

7. The container of any one of the preceding claims, wherein the opening member includes a channel formed in the upper surface of the opening member, said channel extending across the opening member from a front side to a rear side; preferably the opening member includes a further channel formed in the upper surface of the opening member, said further channel extending across the opening member from a front side to a rear side.

8. The container of any one of the preceding claims, wherein the opening member includes recesses formed in an upper surface that are arranged to receive feet of a separate container, so that the containers can be stacked.

9. The container of any one of the preceding claims, wherein the harness includes a first fastener, at least one of the straps is connected to the first fastener, and the first fastener is arranged to connect first and second ends of the strap together, and optionally to adjust the tension of the strap; preferably the first fastener comprises one of: an over centred cam fastener, which is connected to the first end of the strap, the over centred cam being arranged to selectively grip the second end of the strap; a fastener having a first part attached to the first end of the strap and a second part attached to a second end of the strap, wherein the first and second parts are releasably connectable together by way of a latching formation; and a fastener having a first part attached to the first end of the strap and a second part attached to a second end of the strap, wherein the first and second part of the fastener are releasably connectable together by at least one magnet.

10. The container of claim 9, wherein the harness includes a second fastener, at least one of the straps is connected to the second fastener, and the second fastener is arranged to connect first and second ends of the strap together, and optionally to adjust the tension of the strap; preferably the second fastener comprises one of: an over centred cam fastener, which is connected to the first end of the strap, the over centred cam being arranged to selectively grip the second end of the strap; a fastener having a first part attached to the first end of the strap and a second part attached to a second end of the strap, wherein the first and second parts are releasably connectable together by way of a latching formation; and a fastener having a first part attached to the first end of the strap and a second part attached to a second end of the strap, wherein the first and second part of the fastener are releasably connectable together by at least one magnet.

11. The container of any one of the preceding claims, wherein the harness includes a first lifting handle, at least one of the straps is connected to the first lifting handle; and including a first recess arranged to store the first lifting handle, and preferably the first recess is formed in the opening member.

12. The container of claim 11, wherein the harness includes a second lifting handle, at least one of the straps is connected to the second lifting handle; and including a second recess arranged to store the second lifting handle, and preferably the second recess is formed in the opening member.

13. The container of claim 11 or 12, wherein the straps connected to the first and/or second lifting handles wrap around the base of the outer shell.

14. The container of any one of the preceding claims, wherein one of the straps lies across the front side wall, the base, and the rear side wall, and can be selectively laid over the opening member; preferably the first fastener is arranged to selectively connect first and second ends of that strap together.

15. The container of any one of the preceding claims, wherein a further one of the straps lies across the front side wall, the base, and the rear side wall, and that can be selectively laid over the opening member; preferably the second fastener is arranged to selectively connect first and second ends of the further strap together.

16. The container of any one of claims 9 to 15, including a first fixing member for fixing one end of the strap to the opening member; and/or a second fixing member for fixing one end of the further strap to the opening member.

17. The container of any one of the preceding claims, wherein one of the straps lies across the first lateral side wall, the base, and the second lateral side wall; preferably a first end of the strap is attached to a first lifting handle and a second end of the strap is attached to a second lifting handle.

18. The container of claim 17, wherein a further one of the straps lies across the first lateral side wall, the base, and the second lateral side wall; wherein a first end of the further strap is attached to the first lifting handle and a second end of the further strap is attached to the second lifting handle.

19. The container of any one of the preceding claims, wherein one of the straps loops around an upper part of the main body; and/or at least some of the straps are connected together at their intersections; and/or at least one of the straps is fixed to the outer shell.
